# EUROPÄISCHE PATENTSCHRIFT

(11) **EP 3 622 253 B1**
(45) Veröffentlichungstag und Bekanntmachung des Hinweises auf die Patenterteilung: **15.12.2021**
(21) Anmeldenummer: 18725447.9
(22) Anmeldetag: 09.05.2018
(51) Int. Cl.: G01D 5/14

(54) **HILFSKRAFTLENKUNG MIT EINEM SENSOR MIT EINER MAGNETBAUGRUPPE**
POWER-STEERING WITH A SENSOR HAVING A MAGNET ASSEMBLY
DIRECTION ASSISTÉE ÉLECTRIQUE AVEC CAPTEUR DOTÉ D'UN ENSEMBLE MAGNÉTIQUE

(30) Priorität: 11.05.2017 DE 102017110259
(43) Veröffentlichungstag der Anmeldung: 18.03.2020
(73) Patentinhaber: thyssenkrupp Presta AG, 9492 Eschen (LI); thyssenkrupp AG, 45143 Essen (DE)
(72) Erfinder: KNOLL, Peter, 88131 Lindau (DE); HÖDL, Benedikt, 6833 Klaus (AT)
(74) Vertreter: thyssenkrupp Intellectual Property GmbH
(86) Internationale Anmeldenummer: PCT/EP2018/062077
(87) Internationale Veröffentlichungsnummer: WO 2018/206680

(56) Entgegenhaltungen:
- EP-A1- 1 806 757
- WO-A2-2010/031554
- JP-A- 2011 013 137
- US-A- 4 628 259
- US-A1- 2005 073 444
- US-A1- 2010 141 242
- US-A1- 2011 196 635
- US-B1- 6 568 258

## Beschreibung

Die vorliegende Erfindung betrifft eine Hilfskraftlenkung für ein Kraftfahrzeug gemäß Anspruch 1, und ein Verfahren zur Herstellung einer Hilfskraftlenkung mit einem Sensor zum Messen des absoluten Lenkwinkels einer Lenkwelle einer elektromechanischen Hilfskraftlenkung gemäß Anspruch 8.

Lenkwinkelsensoren messen den Einschlagwinkel des Lenkrades eines Kraftfahrzeuges. Dementsprechend soll unter dem Begriff "Lenkwinkel" in der vorliegenden Beschreibung der Drehwinkel der Lenkwelle und des damit gekoppelten Lenkrades verstanden werden, nicht jedoch der Einschlagswinkel der gelenkten Räder des Fahrzeugs. Diese Information wird unter anderem für die Fahrdynamikregelung, dem elektronischen Stabilitäts-Programm (ESP) benötigt. Das generelle Problem bei solchen Drehwinkelbestimmungen besteht darin, dass die Lenkwelle mehrfache Umdrehungen ermöglicht, um das Lenksystem von Lenkanschlag zu Lenkanschlag zu bewegen. Daher ist bei den meisten verwendeten Sensoren eine ständige Registrierung und Speicherung der aktuellen Drehwinkelposition des Lenkrads erforderlich, da gängige Winkelsensoren maximal 360° messen können, ein Kraftfahrzeuglenkrad aber einen Winkelbereich von +/-720° (vier Umdrehungen insgesamt) oder mehr hat.

Auch bei Drehmomentsensoren kommen Drehwinkelsensoren zum Einsatz. Hierbei werden zwei gegeneinander begrenzt verdrehbare Wellenteile über eine Torsionsfeder elastisch miteinander gekoppelt. Wenn ein Wellenteil durch ein vom Fahrer des Fahrzeugs aufgewendetes Drehmoment gegen den anderen Wellenteil verdreht wird, ist der relative Drehwinkel im Wesentlichen proportional zum eingeleiteten Drehmoment. Für eine genaue Bestimmung des Drehmoments ist es wichtig, den Drehwinkel präzise messen zu können.

Für beide Aufgaben werden Sensoren eingesetzt, in denen ein magnetisches Bauelement mit einer Welle gekoppelt ist, und ein Magnetfeldsensor die Relativdrehung des Bauelements gegenüber dem Magnetfeldsensor erfasst.

Besonders bei der Anwendung in Kraftfahrzeugen ist ein hohes Maß an Ausfallsicherheit dieser Sensoranordnung erforderlich, wobei gerade bei dieser Anwendung hohe und niedrige Temperaturen, schnelle Temperaturwechsel und mechanische Belastungen in Form von Vibrationen auftreten. Diese Belastungen sind problematisch für die Befestigung von permanentmagnetischen Bauteilen wie zum Beispiel einem Magnetring auf einem sich drehenden Träger, insbesondere auf der Lenkwelle einer Kraftfahrzeuglenkung.

Aus den Dokumenten WO 2010/031554 A2 und WO 2016/096179 A1 sind Anordnungen bekannt, bei denen Magnetringe auf einen hülsenförmigen Träger aufgesetzt und dort mittels separater Bauteile formschlüssig befestigt oder verklebt werden. Das Dokument EP 1 123 794 A2 zeigt eine Anordnung, bei der eine Trägerhülse zunächst mit einem Zwischenstück versehen wird, und dann ein mit Magnetpartikeln gefülltes Kunststoffmaterial im Spritzgussverfahren darauf geformt wird. Letzteres Bauelement bildet dann den Magnetring.

Die drei genannten Anordnungen sind aufwändig in der Fertigung.

Aus der US 2005/0073444 A1 ist es bekannt, ein Magnetelement durch Vulkanisieren an einen Trägerabschnitt einer Welle anzuformen. Dieses Vorgehen ist aufwendig und unflexibel.

Aus der US 2011/0196635 A1 oder der US 2010/0141242 A1 ist es zwar bekannt ein Magnetelement durch ein aufgeklebtes magnetisches flexibles Band auszubilden. Die Erzeugung einer dauerhaft haltbaren Fixierung und der für den Einsatz in einer Hilfskraftlenkung erforderlichen mechanischen und magnetischen Eigenschaften erfordert jedoch einen hohen Aufwand.

Es ist deshalb eine Aufgabe der vorliegenden Erfindung, eine gattungsgemäße Hilfskraftlenkung mit einem Sensor mit einer Magnetbaugruppe vorzuschlagen, die einfacher zu fertigen und besonders ausfallsicher ist. Außerdem ist es Aufgabe der vorliegenden Erfindung, ein Verfahren zur Herstellung einer besonders ausfallsicheren Hilfskraftlenkung mit einem Sensor mit einer Magnetbaugruppe zu schaffen.

Diese Aufgaben werden von der Vorrichtung gemäß Anspruch 1 und dem Verfahren gemäß Anspruch 8 gelöst.

Bei einer erfindungsgemäßen Hilfskraftlenkung für ein Kraftfahrzeug, umfassend eine um eine Lenkwellenachse drehbar gelagerte Lenkwelle und einen dem Sensor mit einer Magnetbaugruppe, wobei die Magnetbaugruppe ein drehfest mit der Lenkwelle verbundenes Magnetelement umfasst und eine damit zusammenwirkende, raumfeste Sensoreinheit aufweist, wobei das Magnetelement aus einem magnetischen oder magnetisierbaren flexiblen Band gefertigt ist, welches auf einem Trägerabschnitt aufgebracht und durch Adhäsion auf dem Trägerabschnitt an der Lenkwelle befestigt ist, ist erfindungsgemäß vorgesehen, dass der Trägerabschnitt einen zylindrischen Bereich umfasst, auf den das Band in mehreren Schichten aufgewickelt ist.

Die Erfindung sieht vor, dass das Band mehrlagig auf den Träger aufgebracht ist. Dadurch kann das Band dünn gehalten werden und in so vielen Lagen auf den Träger aufgewickelt werden, dass sich die erforderliche Materialstärke und vor allem das für eine sichere Abtastung erforderliche Magnetfeld ergibt. Die erzielbare Magnetfeldstärke ist umso größer, je dicker das Material auf den Träger gewickelt wird.

Der Sensor ist unempfindlich gegen mechanische Belastungen aufgrund von Temperaturschwankungen oder Vibrationen, denn das Band kann den thermisch bedingten Änderungen der Abmessungen des Trägers folgen, ohne dass sich Risse oder plastische Verformungen ergeben, die den Sitz des magnetischen Materials auf dem Trägerabschnitt beeinträchtigen würden. Ein solcher Sensor kann bevorzugt bei einer Kraftfahrzeuglenkung als Drehmomentsensor und/oder als Lenkwinkelsensor eingesetzt werden.

In einer Kraftfahrzeuglenkung, nämlich einer Hilfskraftlenkung für ein Kraftfahrzeug, umfassend eine um eine Lenkwellenachse drehbar gelagerte Lenkwelle und einen Sensor, der ein drehfest mit der Lenkwelle verbundenes Magnetelement und eine damit zusammenwirkende, raumfeste Sensoreinheit aufweist, ist erfindungsgemäß das Magnetelement aus einem magnetischen oder magnetisierbaren flexiblen Band gefertigt, welches auf einen Trägerabschnitt der Lenkwelle aufgebracht und durch Adhäsion auf dem Trägerabschnitt befestigt ist.

Der Sensor kann eine Drehmomentsensoreinheit und/oder eine Lenkwinkelsensoreinheit umfassen. Eine Drehmomentsensoreinheit erfasst die Verdrehung einer oberen Lenkwelle gegenüber einer damit über einen Drehstab verbundenen unteren Lenkwelle als ein Maß des an der oberen Lenkwelle manuell ausgeübten Drehmomentes. Eine Lenkwinkelsensoreinheit hingegen misst den aktuellen Lenkwinkel der Lenkwelle, bei Kombination mit einer Drehmomentsensoreinheit mit der unteren Lenkwelle.

Es kann vorgesehen sein, dass eine integrale Baueinheit eine Drehmomentsensoreinheit und eine Lenkwinkelsensoreinheit aufweist. Dabei sind die Drehmoment- und die Lenkwinkelsensoreinheit in der integralen Baueinheit raumsparend zusammengefasst.

Der Trägerabschnitt kann bevorzugt als Träger, der auch als separates Teil ausgebildet sein kann, gebildet sein. Es ist aber auch denkbar und möglich an der Welle selbst einen Trägerabschnitt auszubilden, an dem das Magnetelement aufgebracht wird.

Es ist auch bevorzugt, den Träger zumindest in einem Bereich zylindrisch, bevorzugt kreiszylindrisch auszubilden. In einer bevorzugten Ausführungsform ist der Träger vorzugsweise als Trägerhülse ausgebildet, da sich diese Bauform besonders einfach und sicher auf einer Welle befestigen lässt. Das Band wird durch Umwickeln auf den Trägerabschnitt oder den Träger, insbesondere den zylindrischen Teil oder die oben erwähnte Trägerhülse, aufgebracht. Ein Träger in Form einer bevorzugt zylindrischen, besonders bevorzugt kreiszylindrischen, Hülse weist dabei eine für das Umwickeln vorteilhafte Form auf.

Denkbar und möglich ist es allerdings auch, den Träger mit einem flachen, insbesondere vollständig ebenen, oder gewölbten Oberflächenabschnitt zu versehen, auf den das Band montiert, insbesondere aufgeklebt, wird. Das Band kann dabei vor der Montage bevorzugt passend zu dem Oberflächenabschnitt ausgestanzt sein.

Das Band kann dabei mit einem magnetischen oder magnetisierbaren Material beschichtet sein. Insbesondere kann das Band auch aus einer Kunststofffolie mit darin enthaltenen ferromagnetischen oder weichmagnetischen Partikeln gefertigt sein. Das Band ist vorzugsweise auf einer Seite selbst lebend beschichtet, sodass es nach Art eines Klebebands auf den Träger aufgewickelt oder aufgeklebt werden kann.

Das Band kann elastisch und flexibel sein. Es genügt aber ein flexibles Band.

Bei dem erfindungsgemäßen Verfahren zur Herstellung eines Sensors mit einer Magnetbaugruppe, die einen auf einem Träger angeordneten Magnetring umfasst, ist vorgesehen, einen Träger bereitzustellen, der Teil einer Gebereinrichtung des Sensors ist, und weiter ein magnetisches oder magnetisierbaren Band bereitzustellen, das dann in einem weiteren Verfahrensschritt auf den Träger aufzubringen ist, wobei das Band entlang einer Umfangsfläche des Trägers auf den Träger gewickelt wird und mehrere Lagen des Bandes auf den Träger aufgebracht werden, und das Band durch Adhäsion auf dem Träger befestigt wird.

Der Träger kann zunächst so gestaltet werden, wie er sicher mit der Welle zu verbinden ist, deren Bewegung detektiert werden soll. Dieser Träger kann dann mit dem magnetisierbaren oder magnetischen Band durch Umwickeln oder Aufkleben appliziert werden, sodass sich eine haltbare, elastische oder dehnbare magnetische Schicht auf dem Träger ergibt. Eine derart hergestellte Sensoranordnung ist besonders unempfindlich gegen mechanische Beanspruchungen aufgrund von Temperaturschwankungen und Vibrationen, wie sie sich im Betrieb eines Kraftfahrzeugs zwangsläufig ergeben.

Insbesondere kann das Band bei dem erfindungsgemäßen Verfahren entlang einer vorzugsweise ringförmigen Umfangsfläche des Trägers auf den Träger gewickelt werden, sodass sich im Ergebnis ein Magnetring ergibt.

Das Band ist vorzugsweise selbstklebend beschichtet, sodass es durch Adhäsion auf dem Träger befestigt werden kann. Bevorzugt werden mehrere Lagen des Bandes auf den Träger gewickelt, sodass die einzelnen Lagen relativ dünn sind und sich dennoch eine ausreichende Materialstärke der magnetischen Lagen ergibt. In einer bevorzugten Ausführungsform wird das Band nach dem Aufbringen auf den Träger magnetisiert.

Eine alternative Ausführungsform sieht vor, dass das Band ein gummielastisches Band in Ringform ist. Ein solches Band kann beispielsweise aus EPDM gefertigt sein, das mit weichmagnetischen Partikeln gefüllt ist. Bevorzugt wird ein EPDM mit mindestens 60 Vol.% weichmagnetischem Füllmaterial.

Bevorzugte Ausführungsformen der Erfindung werden nachfolgend anhand der Zeichnungen näher erläutert. Gleiche bzw. funktionsgleiche Bauteile sind dabei in den Figuren mit denselben Bezugszeichen versehen. Es zeigen:
- Fig. 1:: eine räumliche Ansicht einer elektromechanischen Hilfskraftlenkung mit einem Elektromotor, einem Drehmomentsensor und einem Lenkwinkelsensor,
- Fig. 2:: eine Detailansicht der integralen Baueinheit des Drehmomentsensors und des Lenkwinkelsensors,
- Fig. 3:: eine Explosionsdarstellung der Anordnung der integralen Baueinheit auf der Lenkwelle,
- Fig. 4:: eine Explosionsdarstellung der integralen Baueinheit von einer ersten Seite,
- Fig. 5:: eine Explosionsdarstellung der integralen Baueinheit von einer zweiten Seite,
- Fig. 6:: die sich im Betrieb drehenden Bauelemente der Sensoranordnung in einer perspektivischen Darstellung,
- Fig. 7:: die Bauelemente aus Fig. 6 in einer Explosionsdarstellung,

- Fig. 8:: ein Magnetelement in Form eines Magnetrings auf einer Trägerhülse,
- Fig. 9:: den Magnetring und die Trägerhülse aus Fig. 8 in einer anderen Darstellung,
- Fig. 10:: den Magnetring mit einer anderen Trägerhülse,
- Fig. 11:: die Bauelemente aus Fig. 10 in einer anderen Darstellung,
- Fig. 12:: ein auf einem Geberzahnrad ausgebildetes Magnetelement, das nach dem erfindungsgemäßen Verfahren hergestellt ist, sowie
- Fig. 13, 14 und 15:: eine Sensoranordnung, bei der das Magnetelement direkt auf die Welle aufgebracht ist.

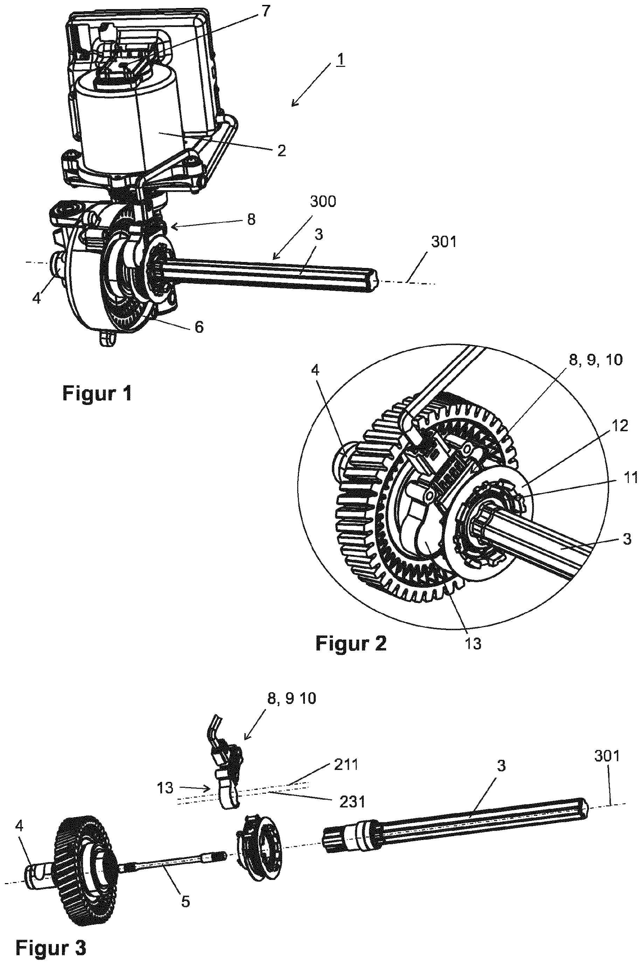

Die Figuren 1 bis 3 zeigen eine elektromechanische Hilfskraftlenkung 1 eines Kraftfahrzeuges mit einem Elektromotor 2, der an einer Lenksäule die Lenkbewegung eines Fahrers unterstützt. Zur Unterstützung ist der Rotor des Elektromotors über ein Getriebe 6, im Beispiel ein Schneckenradgetriebe, in die Drehung der Lenkwelle 300 eingekoppelt. Die Lenkwelle 300 weist eine obere Lenkwelle 3 und eine untere Lenkwelle 4 auf, die über einen Drehstab 5 miteinander verbunden sind und um eine Lenkwellenachse 301 drehbar gelagert sind. Die obere Lenkwelle 3 ist mit einem nicht dargestellten Lenkrad unmittelbar drehfest verbunden. Der Elektromotor 2 treibt über ein Getriebe 6 die untere Lenkwelle 4 an, die mit einem nicht dargestellten Zahnstangen-Lenkgetriebe verbunden ist. Der Elektromotor 2 weist einen Rotorlagesensor (RPS) 7 auf. Zudem ist eine integrale Baueinheit 8 mit einer Drehmomentsensoreinheit 9 und einer Lenkwinkelsensoreinheit 10 vorgesehen. Die Drehmomentsensoreinheit 9 erfasst die Verdrehung der oberen Lenkwelle 3 gegenüber der unteren Lenkwelle 4 als ein Maß des an der oberen Lenkwelle 3 manuell ausgeübten Drehmomentes. Die Lenkwinkelsensoreinheit 10 hingegen misst den aktuellen Lenkwinkel der unteren Lenkwelle 3.

Die Drehmomentsensoreinheit 9 weist ein drehfest mit der oberen Lenkwelle 3 verbundenes Magnetelement, das als Magnetring 11 (Permanentmagneten) ausgebildet ist und Magnetflussleiter 12 auf. Eine dazugehörige Sensoreinheit 13 ist raumfest mit der Einheit des Elektromotors 2 verbunden.

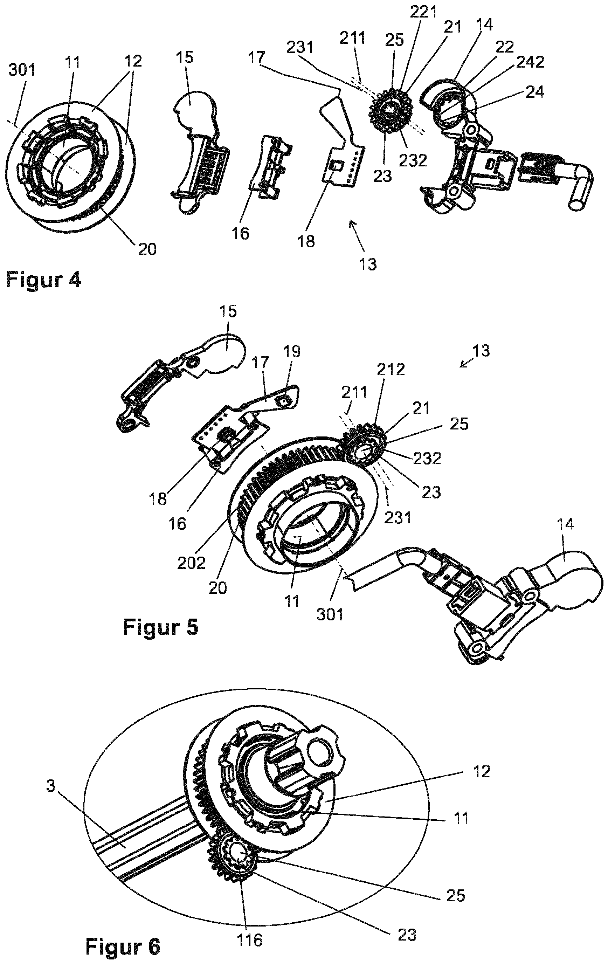

In den Figuren 4 und 5 ist der Aufbau der integralen Baueinheit 8 im Detail dargestellt. Die Sensoreinheit 13 weist ein Gehäuse 14 mit einem Gehäusedeckel 15 auf und darin angeordnet einen Magnetflussleiter 16 und einen auf einer Leiterplatte 17 angeordneten Magnetsensor 18. Die Flussleiter 12, 16 dienen zur Konzentrierung des magnetischen Flusses an dem Magnetsensor 18.

Der Magnetsensor 18 detektiert die Verdrehung der mit dem Magnetring 11 verbunden Welle 3 gegenüber der mit einem der Magnetflussleiter 12 verbundenen unteren Welle 4.

Neben dem Magnetsensor 18 der Drehmomentsensoreinheit 9 ist auf der Leiterplatte 17 auch ein Sensorelement 19 der Lenkwinkelsensoreinheit 10 vorgesehen.

Der Magnetring 11 ist von einem ersten Zahnrad 20 mit einer nach außen gerichteten ersten Verzahnung 202 umfangseitig umgeben, das Teil der Lenkwinkelsensoreinheit 10 ist. Diese Verzahnung ist konzentrisch zur Lenkwellenachse 301 angeordnet und mit der unteren Lenkwelle 4 drehfest gekoppelt. In diese erste Verzahnung 202 des ersten Zahnrades 20 greift eine zweite umlaufende nach außen gerichtete zweite Verzahnung 212 eines zweite Zahnrades 21 ein, dass sich auf dem ersten Zahnrad 20 abwälzt und in einer Aufnahme des Gehäuses 14 drehbar um eine zweite Zahnradachse 211 gelagert ist. Die zweite Zahnradachse 211 ist parallel und versetzt zur Lenkwellenachse 301 angeordnet. In dem zweiten Zahnrad 21 wiederum ist ein drittes Zahnrad 23 drehbar um eine dritte Zahnradachse 231 drehbar exzentrisch geführt. Entsprechend ist die dritte Zahnradachse 231 zur zweiten Zahnradachse 211 und zur Lenkwellenachse 301 parallel und versetzt angeordnet. Das dritte Zahnrad weist eine umlaufende nach außen gerichtete dritte Verzahnung 232 auf. Eine nach innen gerichtete umlaufende vierte Verzahnung 242 eines vierten Zahnrades 24 ist in der Aufnahme 22 im Gehäuse 14 angeordnet und steht in Eingriff mit der dritten Verzahnung 232, so dass diese dritte Verzahnung 232 entlang dieser vierten Verzahnung 242 abrollt. Die Zahnräder 20, 21, 23 bilden ein Stirnrädergetriebe, wobei alle Drehachsen 301, 201, 211, 231 zueinander parallel und zueinander versetzt angeordnet sind.

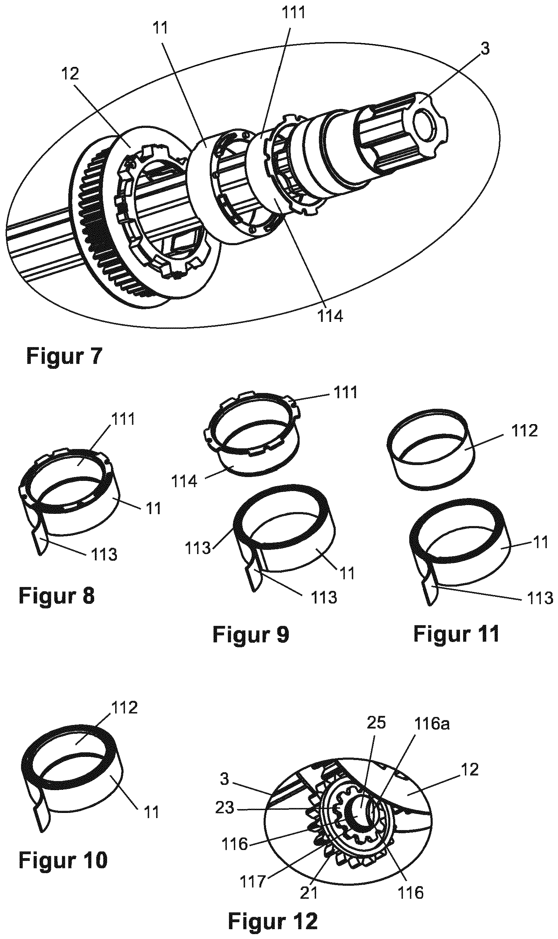

Die Drehbewegung der oberen Lenkwelle 3 wird somit über das Getriebe auf das dritte Zahnrad 23 übertragen, in welchem ein Permanentmagnet, gebildet durch ein Magnetelement 25, angeordnet ist. Die Rotation des dritten Zahnrades 23 wird dann mithilfe des Sensorelementes 19 auf der Leiterplatte 17 erfasst. Das Magnetelement 25 ist im Beispiel als magnetisches Band ausgebildet, das auf die Stirnfläche aufgeklebt ist, wie dies in Figur 12 genauer veranschaulicht ist. Alternative wäre es allerdings denkbar und möglich, dass das magnetische Substrat 25 in das dritte Zahnrad 23 integriert ist oder sogar das gesamte dritte Zahnrad bildet.

Das Sensorelement 19 der Lenkwinkelsensoreinheit 10 ist vorzugsweise ein Hall-Sensor, der gegenüber dem Permanentmagneten beziehungsweise dem Magnetelement 25 des dritten Zahnrads 23 ruhend angeordnet ist.

Die sich mit der Lenkwelle 3 bzw. der nicht dargestellten unteren Lenkwelle 4 drehenden Bauelemente und das dritte Zahnrad 23 sind in der Figur 6 aus einer anderen Perspektive dargestellt. In ähnlicher Ansicht, jedoch in einer Explosionsdarstellung, sind diese Bauteile auch in der Figur 7 abgebildet. Die Figur 7 zeigt dabei in Richtung der Längsachse der Lenkwelle 3 aufgereiht den Magnetflussleiter 12, den Magnetring 11 und eine Trägerhülse 111, die bei dieser Ausführungsform dazu vorgesehen ist, den Magnetring 11 zu tragen und insbesondere auch dessen Form zu definieren.

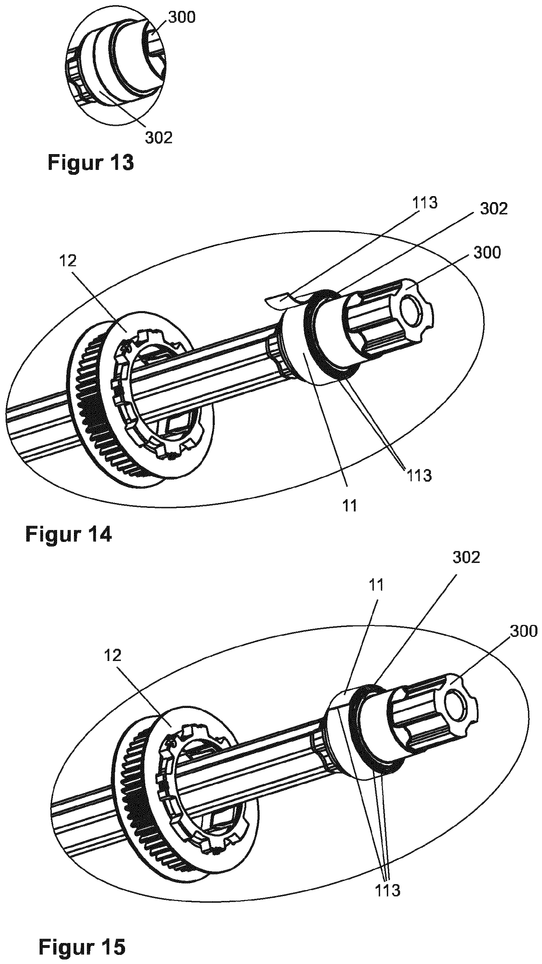

In der Figur 8 ist die Magnetbaugruppe bestehend aus der Trägerhülse 111 und dem Magnetring 11 näher veranschaulicht. Der Magnetring 11 ist dadurch gebildet, dass ein elastisches Band 113 auf die äußere, kreiszylindrisch Umfangsfläche der Trägerhülse 111 aufgewickelt ist. Dabei ist in den Figuren 8 bis 10 veranschaulicht, wie dieses Band 113 noch nicht vollständig aufgewickelt ist, um die Wickeltechnik zu veranschaulichen. Im eingebauten Zustand ist das Band vollständig aufgewickelt und es soll kein Teil des Bandes vom Träger abstehen, wie dies am Beispiel eines Ausführungsbeispiels gemäß Fig. 14 veranschaulicht ist. Das elastische Band ist dabei einseitig mit einem Klebstoff selbstklebend beschichtet. Diese Klebeseite ist der äußeren Oberfläche der Trägerhülse 111 zugewandt. Weiter ist das elastische Band 113 magnetisch oder magnetisierbaren ausgestattet, in dem ferromagnetische Partikel entweder in das Kunststoffmaterial des elastischen Bandes 113 eingebettet sind oder auf die Oberfläche des elastischen Bandes 113 aufgebracht sind. Die Oberfläche, die die ferromagnetischen Partikel trägt, ist dabei die der Klebeseite abgewandte Oberfläche des Bandes 113, die in der Darstellung der Figur 8 nach außen, also der Trägerhülse 111 abgewandt orientiert ist. In der Darstellung der Figur 8 ist das elastische Band 113 noch nicht vollständig auf die Trägerhülse 111 aufgewickelt. Der Wickelvorgang umfasst bei diesem bevorzugten Ausführungsbeispiel mehrere Gänge oder Schichten. Ein loses Ende des Bandes 113 ist in der Figur 8 noch nicht auf den darunterliegenden, vorher auf gewickelten Gang aufgeklebt und soll veranschaulichen, wie das Band 113 auf die Trägerhülse 111 aufgebracht wird. Sobald das Band 113 in der vorgesehenen Dicke auf die Trägerhülse 111 aufgebracht ist, bildet das Band den Magnetring 11, der entweder bereits magnetisiert ist oder in einem äußeren Magnetfeld magnetisiert werden kann, sodass das Magnetfeld des Magnetrings 11 durch den Magnetsensor 18 abtastbar ist.

Die Figur 9 zeigt den Magnetring 11 und die Trägerhülse 111 in einem axialen Abstand voneinander. Diese Darstellung veranschaulicht, dass der Magnetring 11 seine Form dadurch erhält, dass das elastische Band 113 selbstklebend auf eine äußere, kreiszylindrische Mantelfläche 114 der Trägerhülse 111 aufgewickelt wird. Das elastische Band 113 ist dehnbar und deshalb unempfindlich gegen Änderungen des Durchmessers der Trägerhülse 111 aufgrund thermischer Einflüsse. Die durch Temperaturänderung auftretenden Spannungen werden einerseits durch die Elastizität und Dehnbarkeit des Bandes 113 abgebaut, und andererseits dadurch minimiert, dass die Materialstärke des Bandes 113 gering ist im Vergleich zu der Materialstärke von herkömmlichen, einteiligen und massiven Magnetringen nach dem eingangs genannten Stand der Technik.

In der Figur 10 ist eine andere Ausführungsform des Magnetrings 11 dargestellt. In dieser Ausführungsform ist eine ringförmige Trägerhülse 112 vorgesehen, die das elastische Band 113 mit den darin eingebetteten oder darauf aufgebrachten ferromagnetischen Partikeln trägt und dem Wickel die erforderliche ringförmige Gestalt verleiht. Die Trägerhülse 112 kann in dieser Form entweder auf eine im Durchmesser angepasste weitere Trägerhülse 111 aufgesetzt werden, oder direkt auf einer Lenkwelle 3 montiert werden, mit der die Trägerhülse 112 dann drehfest verbunden wird.

Entsprechend der Figur 9 ist auch die Baugruppe aus Figur 10 aus zwei konzentrisch ineinander passenden Teilen zusammengesetzt, die in der Figur 11 in einem Abstand voneinander dargestellt sind. Die Figur 11 zeigt deutlich, dass die äußere Gestalt des durch den Wickelvorgang unter Verwendung des elastischen Bandes 113 gebildeten Magnetrings 11 von der äußeren Umfangsfläche der Trägerhülse 112 bestimmt ist.

Die Figur 12 zeigt schließlich das dritte Zahnrad 23 mit dem Magnetelement oder Magnetsubstrat 25, dessen Aufbau und Funktion bereits oben beschrieben wurde. Das Magnetelement 25 ist in diesem Ausführungsbeispiel dadurch gebildet, dass ein elastisches Band 116 auf eine Stirnfläche 117 des Zahnrads 23 aufgeklebt ist. mit dem abstehenden Abschnitt 116a des Bandes 116 ist in der Figur veranschaulicht, wie das bevorzugt zuvor in Form ausgestanzte Band, Schicht für Schicht aufgeklebt wird. Das elastische Band 116 ist in diesem Fall ebenfalls ein Band mit ferromagnetischen Eigenschaften, wie dies oben zu dem Band 113 beschrieben wurde. Auch das Band 116 ist auf seiner Innenseite, die der Stirnfläche 117 zugewandt ist, selbstklebend beschichtet, sodass es durch Adhäsion auf der Stirnfläche 117 dauerhaft befestigt ist. Ferromagnetische Partikel sind bei dem Band 116 ebenfalls entweder in das Material eingearbeitet oder auf dessen der Klebeschicht abgewandten äußeren Oberfläche angeordnet. Der gemäß dieser Figur 12 veranschaulichte abstehende Abschnitt 116a des Bandes 116 ist im eingebauten Zustand komplett aufgeklebt, wie dies in Figur 6 beispielsweise dargestellt ist.

In den Figuren 13, 14 und 15 ist ein Ausführungsbeispiel der Erfindung dargestellt, bei dem das Magnetelement 11 direkt auf einen Trägerabschnitt 302 der Welle, der einteilig mit der Welle, im Beispiel sogar integral mit der Welle ausgebildet ist, als flexibles Band 113 in mehreren Schichten aufgewickelt ist. In der Figur 13 ist dabei ein Ausschnitt aus der Welle 300 mit dem Trägerabschnitt 302 dargestellt. Das flexible Band 113 wird, wie in Figur 14 veranschaulicht um den Trägerabschnitt 302 gewickelt. Dabei wird auch das freie Ende des Bandes zur Bildung des fertigen Magnetelements 11 angedrückt, wie es in Figur 15 veranschaulicht ist.

## Patentansprüche

1. Hilfskraftlenkung (1) für ein Kraftfahrzeug, umfassend eine, einen Trägerabschnitt aufweisende und um eine Lenkwellenachse (301) drehbar gelagerte Lenkwelle (300) und einen Sensor (9) mit einer Magnetbaugruppe, wobei die Magnetbaugruppe ein drehfest mit der Lenkwelle (300) verbundenes Magnetelement (11, 25) umfasst und eine damit zusammenwirkende, raumfeste Sensoreinheit (13) aufweist, wobei das Magnetelement (11, 25) aus einem magnetischen oder magnetisierbaren flexiblen Band (113, 116) gefertigt ist, welches auf einen Trägerabschnitt (302) aufgebracht und durch Adhäsion auf dem Trägerabschnitt (302) an der Lenkwelle (3, 300) befestigt ist, wobei der Trägerabschnitt (302) einen zylindrischen Bereich umfasst, auf den das flexible Band (113) in mehreren Schichten aufgewickelt ist.

2. Hilfskraftlenkung nach Anspruch 1 **dadurch gekennzeichnet, dass** der Trägerabschnitt als Träger (111, 112, 117) ausgebildet ist und das flexible Band (113, 116) auf den Träger (111, 112, 117) aufgebracht und durch Adhäsion auf dem Träger (111, 112, 117) befestigt ist.

3. Hilfskraftlenkung nach Anspruch 1, **dadurch gekennzeichnet, dass** das flexible Band (113, 116) mit einem magnetischen oder magnetisierbaren Material beschichtet ist.

4. Hilfskraftlenkung nach Anspruch 1, **dadurch gekennzeichnet, dass** das flexible Band (113, 116) eine Kunststofffolie mit darin enthaltenen ferromagnetischen Partikeln ist.

5. Hilfskraftlenkung nach einem der vorhergehenden Ansprüche, **dadurch gekennzeichnet, dass** das flexible Band (113, 116) selbstklebend beschichtet ist.

6. Hilfskraftlenkung nach einem der vorhergehenden Ansprüche, **dadurch gekennzeichnet, dass** das flexible Band (113, 116) mehrlagig auf den Trägerabschnitt aufgebracht ist.

7. Hilfskraftlenkung nach Anspruch 2, **dadurch gekennzeichnet, dass** der Träger (111, 112) einen zylindrischen Bereich umfasst, auf den das flexible Band (113) in mehreren Gängen aufgewickelt ist.

8. Verfahren zur Herstellung einer Hilfskraftlenkung mit einem Sensor (9), wobei der Sensor (9) eine Magnetbaugruppe und eine damit zusammenwirkende, raumfeste Sensoreinheit (13) aufweist, wobei die Magnetbaugruppe ein auf einem Träger (111, 117) angeordnetes Magnetelement (11, 25) umfasst, wobei das Verfahren folgende Schritte aufweist:
Bereitstellen eines Trägers (111, 117), der Teil einer Gebereinrichtung (8) der Hilfskraftlenkung ist,
Bereitstellen eines magnetischen oder magnetisierbaren flexiblen Bandes (113, 116),
Aufbringen des flexiblen Bandes (113, 116) auf dem Träger (111, 112), wobei das flexible Band (113, 117) entlang einer Umfangsfläche (114) des Trägers (111, 112) auf den Träger (111, 112) gewickelt wird und
mehrere Lagen des flexiblen Bandes (113, 116) auf den Träger (111, 112, 117) aufgebracht werden, und das flexible Band (113, 116) durch Adhäsion auf dem Träger (111, 112) befestigt wird.

9. Verfahren nach Anspruch 8, **dadurch gekennzeichnet, dass** das flexible Band (113, 116) nach dem Aufbringen auf den Träger (111, 112) magnetisiert wird.

10. Verfahren nach einem der vorhergehenden Ansprüche 8 bis 9, **dadurch gekennzeichnet, dass** der Träger mit einer Welle (3) verbunden wird.

11. Hilfskraftlenkung nach Anspruch 1, **dadurch gekennzeichnet, dass** der Sensor eine Drehmomentsensoreinheit (9) und/oder eine Lenkwinkelsensoreinheit (10) umfasst.

12. Hilfskraftlenkung (1) nach Anspruch 11, **dadurch gekennzeichnet, dass** eine integrale Baueinheit (8) eine Drehmomentsensoreinheit (9) und eine Lenkwinkelsensoreinheit (10) aufweist.

## Claims

1. Power steering system (1) for a motor vehicle, comprising a steering shaft (300) that has a carrier section and is mounted such that it can rotate about a steering shaft axis (301), and a sensor (9) having a magnet assembly, wherein the magnet assembly comprises a magnet element (11, 25) co-rotationally connected to the steering shaft (300) and a physically fixed sensor element (13) interacting therewith, wherein the magnet element (11, 25) is made of a magnetic or magnetizable flexible tape (113, 116), which is applied to a carrier section (302) and is fixed to the steering shaft (3, 300) by adhesion to the carrier section (302), wherein the carrier section (302) comprises a cylindrical region, onto which the flexible tape (113) is wound in multiple layers.

2. Power steering system according to Claim 1, **characterized in that** the carrier section is formed as a carrier (111, 112, 117) and the flexible tape (113, 116) is applied to the carrier (111, 112, 117) and is fixed to the carrier (111, 112, 117) by adhesion.

3. Power steering system according to Claim 1, **characterized in that** the flexible tape (113, 116) is coated with a magnetic or magnetizable material.

4. Power steering system according to Claim 1, **characterized in that** the flexible tape (113, 116) is a plastic film with ferromagnetic particles contained therein.

5. Power steering system according to one of the preceding claims, **characterized in that** the flexible tape (113, 116) is self-adhesively coated.

6. Power steering system according to one of the preceding claims, **characterized in that** the flexible tape (113, 116) is applied to the carrier section in multiple layers.

7. Power steering system according to Claim 2, **characterized in that** the carrier (111, 112) comprises a cylindrical region, onto which the flexible tape (113) is wound in multiple turns.

8. Method for producing a power steering system with a sensor (9), wherein the sensor (9) has a magnet assembly and a physically fixed sensor unit (13) interacting therewith,
wherein the magnet assembly comprises a magnet element (11, 25) arranged on a carrier (111,117),
wherein the method has the following steps:
providing a carrier (111, 117), which is part of a transmitter device (8) of the power steering system,
providing a magnetic or magnetizable flexible tape (113, 116),
applying the flexible tape (113, 116) to the carrier (111, 112),
wherein the flexible tape (113, 117) is wound onto the carrier (111, 112) along a circumferential surface (114) of the carrier (111, 112), and multiple layers of the flexible tape (113, 116) are applied to the carrier (111, 112, 117), and the flexible tape (113, 116) is fixed to the carrier (111, 112) by adhesion.

9. Method according to Claim 8, **characterized in that** the flexible tape (113, 116) is magnetized following the application to the carrier (111, 112).

10. Method according to one of the preceding Claims 8 to 9, **characterized in that** the carrier is connected to a shaft (3).

11. Power steering system according to Claim 1, **characterized in that** the sensor comprises a torque sensor unit (9) and/or a steering angle sensor unit (10).

12. Power steering system (1) according to Claim 11, **characterized in that** an integral structural unit (8) has a torque sensor unit (9) and a steering angle sensor unit (10) .

## Revendications

1. Direction assistée (1) destinée à un véhicule automobile, ladite direction assistée comprenant un arbre de direction (300), qui comporte une portion de support et qui est monté de manière à pouvoir tourner sur un axe d'arbre de direction (301), et un capteur (9) pourvu d'un ensemble magnétique, l'ensemble magnétique comprenant un élément magnétique (11, 25) relié solidairement en rotation à l'arbre de direction (300) et comportant une unité de capteur (13) spatialement fixe qui coopère avec celui-ci, l'élément magnétique (11, 25) étant fabriqué à partir d'une bande flexible magnétique ou magnétisable (113, 116) qui est appliquée sur une portion de support (302) et qui est fixée à l'arbre de direction (3, 300) par adhérence sur la portion de support (302), la portion de support (302) comprenant une zone cylindrique sur laquelle la bande flexible (113) est enroulée sur plusieurs couches.

2. Direction assistée selon la revendication 1, **caractérisée en ce que** la portion de support est conçue comme un support (111, 112, 117) et la bande flexible (113, 116) est appliquée sur le support (111, 112, 117) et est fixée par adhérence au support (111, 112, 117).

3. Direction assistée selon la revendication 1, **caractérisée en ce que** la bande flexible (113, 116) est revêtue d'un matériau magnétique ou magnétisable.

4. Direction assistée selon la revendication 1, **caractérisée en ce que** la bande flexible (113, 116) est un film de matière synthétique renfermant des particules ferromagnétiques.

5. Direction assistée selon l'une des revendications précédentes, **caractérisée en ce que** la bande flexible (113, 116) est pourvue d'un revêtement auto-adhésif.

6. Direction assistée selon l'une des revendications précédentes, **caractérisée en ce que** la bande flexible (113, 116) est appliquée sur plusieurs couches sur la portion de support.

7. Direction assistée selon la revendication 2, **caractérisée en ce que** le support (111, 112) comprend une zone cylindrique sur laquelle la bande flexible (113) est enroulée en plusieurs tours.

8. Procédé de fabrication d'une direction assistée pourvue d'un capteur (9),
le capteur (9) comportant un ensemble magnétique et une unité de capteur (13) spatialement fixe coopérant avec celui-ci, l'ensemble magnétique comprenant un élément magnétique (11, 25) disposé sur un support (111, 117), le procédé comprenant les étapes suivantes :
fourniture un support (111, 117) qui fait partie d'un dispositif émetteur (8) de la direction assistée,
fournir une bande flexible magnétique ou magnétisable (113, 116),
appliquer la bande flexible (113, 116) sur le support (111, 112), la bande flexible (113, 117) étant enroulée sur le support (111, 112) le long d'une surface périphérique (114) du support (111, 112) et plusieurs couches de la bande flexible (113, 116) étant appliquées sur le support (111, 112, 117), et la bande flexible (113, 116) étant fixée au support (111, 112) par adhérence.

9. Procédé selon la revendication 8, **caractérisé en ce que** la bande flexible (113, 116) est magnétisée après avoir été appliquée sur le support (111, 112).

10. Procédé selon l'une des revendications précédentes 8 à 9, **caractérisé en ce que** le support est relié à un arbre (3).

11. Direction assistée selon la revendication 1, **caractérisée en ce que** le capteur comprend une unité de capteur de couple (9) et/ou une unité de capteur d'angle de direction (10).

12. Direction assistée (1) selon la revendication 11, **caractérisée en ce qu'**une unité structurelle intégrale (8) comporte une unité de capteur de couple (9) et une unité de capteur d'angle de direction (10).
